Europäisches Patentamt

European Patent Office

Office européen des brevets

(19)

(11) Veröffentlichungsnummer: **0 029 500**
**A1**

## (12) EUROPÄISCHE PATENTANMELDUNG

(21) Anmeldenummer: 80106217.5

(22) Anmeldetag: 13.10.80

(51) Int. Cl.³: **B 42 F 9/00**
G 09 F 1/10, E 05 D 3/02
A 47 G 1/17

(30) Priorität: 30.10.79 DE 2943691

(43) Veröffentlichungstag der Anmeldung:
03.06.81 Patentblatt 81/22

(84) Benannte Vertragsstaaten:
AT BE CH FR GB IT LI LU NL SE

(71) Anmelder: Walter Hebel GmbH & Co
Brückenstrasse 4
D-5242 Kirchen/Sieg(DE)

(72) Erfinder: Schirmuly, Berthold
Auf der Pracht 12
D-5242 Kirchen (Sieg)(DE)

(54) **Magnetische Klemmvorrichtung.**

(57) Bei dieser magnetischen Klemmvorrichtung ist in den Schenkel (2) der Klappe ein Magnet (10) eingelassen, der mit dem Element (10) des Schenkels (1) zusammenwirkt. Die beiden Schenkel (1 u.2) sind scharnierartig miteinander verbunden, wobei die Achse des Scharniers in einem Langloch (5) gelagert ist. Diese Art der Lagerung ermöglicht es, daß der Schenkel (2) des Scharniers in der Offenstellung verharrt und durch Einschieben des Klemmgutes (8) im Bereich des Langloches (5) vom Anschlag (7) weg angehoben wird und nach unten klappt.

Fig.2

EP 0 029 500 A1

0029500

Anmeldetag: 13.10.1980
Az.: E PA 80 10 6217,5 - unser Az.: EP 1

Walter Hebel GmbH & Co, Brückenstraße 4, 5242 Kirchen (Sieg)

„Magnetische Klemmvorrichtung"

Die Erfindung betrifft eine magnetische Klemmvorrichtung zum Festhalten von blatt- und folienförmigem Anschauungsmaterial wie Zeichnungen, Bilder, Merkzettel und dergleichen, bestehend aus einer Klappe, deren beide Schenkel scharnierartig miteinander verbunden sind und in die magnetische Elemente eingebaut sind.

Eine derartige Klemmvorrichtung ist z.B. durch das DE-GM 76 10 463 bekannt geworden. Das Scharnier besteht aus dem gleichen flexiblen Plastikmaterial wie auch die beiden Schenkel. Diese und ähnliche bekannte Klemmvorrichtungen können an Wänden, Planhaltern, im Auto usw. zweckdienlich zur Aufnahme von Anschauungssmaterial verwendet werden.

Der Nachteil allerdings ist der, daß das Einbringen des Klemmgutes nur mit beiden Händen möglich ist. Während nämlich das Klemmgut mit der linken Hand bereitgehalten wird, muß die rechte Hand die Klappe öffnen und solange halten, bis das Klemmgut eingeschoben ist. Erst danach kann die rechte Hand die Klappe loslassen, damit diese sich durch die magnetischen Anziehungskräfte schließt und das Klemmgut festhält.

Aufgabe der vorliegenden Erfindung ist die Schaffung einer magnetischen Klemmvorrichtung, die mit einer Hand bedient werden kann, dergestalt, daß die Klappe nach dem Öffnen automatisch im geöffneten Zustand verharrt und das Schließen der Klappe durch Anstoßen mit der oberen Klemmgutkante ausgelöst wird.

Diese Aufgabe wird erfindungsgemäß dadurch gelöst, daß die Achse des Scharniers, z.B. ein durchgehender Scharnierstift oder zwei an einem der Schenkel beiderseitig angeformten Zapfen in einem Langloch des anderen Schenkels gelagert ist bzw. sind, wobei das Langloch sowie parallel dazu eine einen Anschlag bildende Fläche in einem Winkel von etwa 90° zur Ebene der Klemmfläche des Schenkels verläuft.

Ein Ausführungsbeispiel der Erfindung wird nachfolgend näher beschrieben und durch die beiliegende Zeichnung veranschaulicht. Es zeigt

Fig. 1, Draufsicht auf die Klemmvorrichtung.

Fig. 2, Schnitt durch die Klemmvorrichtung in aufgeklapptem Zustand.

Fig. 3, Wie Fig. 2, jedoch Schenkel 2 durch Klemmgut angehoben und beginnend abzuklappen.

Die beiden Schenkel 1 u. 2 der Klappe sind scharnierartig miteinander verbunden. Der Schenkel 1 ist als Befestigungsgrundkörper ausgebildet und auf eine Leiste 3 verschiebbar aufgesteckt. Die beiden Zapfen 4 bilden die Achse für die scharnierartige Lagerung des Schenkels 2, und zwar erfolgt die Lagerung in einem Langloch 5.

Parallel zu dem Langloch 5 verläuft die Fläche 6. Sie bildet in geöffnetem Zustand der Klemmvorrichtung, d.h., wenn der Schenkel 2 in etwa 90° zum Schenkel 1 hochgestellt ist, einen Anschlag 7, der sich auf dem Schenkel 1 abstützt.
Beim Einbringen des Klemmgutes 8 wird durch Anstoßen der Klemmgutoberkante 9 der Schenkel 2 im Bereich des Langloches 5 angehoben. Der Hub ist ausreichend für die Freigabe des Anschlages 7, so daß der Schenkel 2 nach unten klappt und die Magnetkraft der in den Klemmflächen der Schenkel 1 u. 2 eingebauten Magnetelemente 10 wirksam wird.

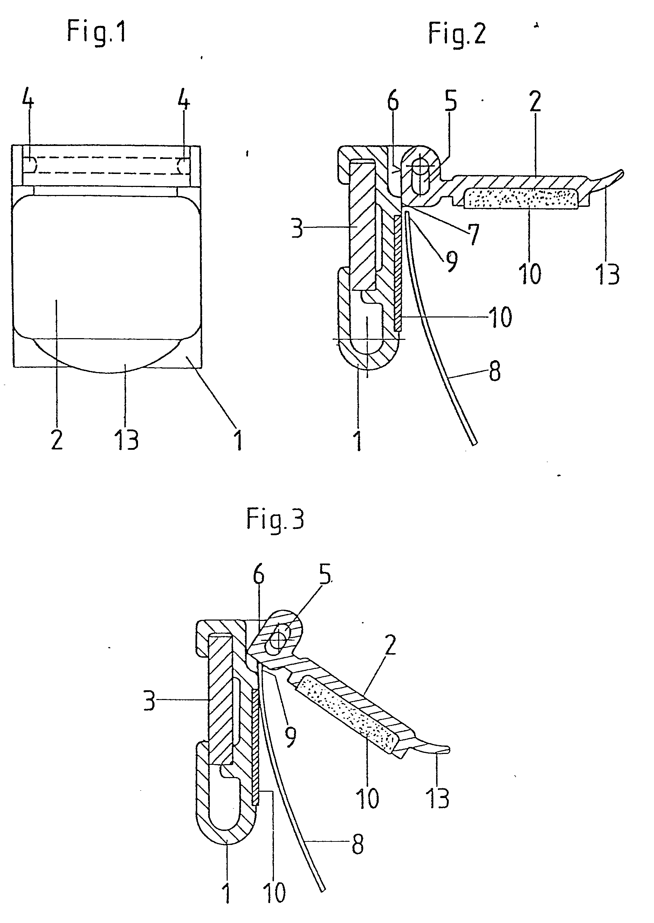

Beim Hochheben des Schenkels 2 bewegt dieser sich durch sein Eigengewicht im Bereich des Langloches 5 nach unten, (Stellung Fig. 2), wobei die parallel zum Langloch 5 verlaufende Fläche 6 den Anschlag 7 gegenüber dem Schenkel 1 bildet und so der Schenkel 2 in der geöffneten Stellung verharrt.

Zum bequemeren Anheben des Schenkels 2 dient die kleine Zunge 13.

0029500

Patentanspruch

1. Magnetische Klemmvorrichtung, bestehend aus einer
Klappe, deren beide Schenkel scharnierartig miteinander verbunden sind und in die magnetische Elemente eingebaut sind,
dadurch gekennzeichnet,
daß die Achse des Scharniers, z.B. ein durchgehender
Scharnierstift oder zwei an einem der Schenkel(1)
beiderseitig angeformten Zapfen(4)in einem Langloch(5)
des anderen Schenkels (2) gelagert ist, bzw. sind,
wobei das Langloch (5) sowie parallel dazu eine
einen Anschlag (7) bildende Fläche (6) in einem Winkel von etwa 90° zur Ebene der Klemmfläche (10) des
Schenkels (2) verläuft.

**Fig.1**

**Fig.2**

**Fig.3**

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U - 7 908 973 (FA. MAGNETO-PLAN H. JO. HOLTZ)<br><br>* Zusammenfassung; Abbildung 1 * | 1 |
| | -- | |
| | CH - A - 279 493 (ADRIEN DORIOT)<br><br>* Anspruch; Unteranspruch; Seite 1, Zeilen 47-58; Figuren 1-3 * | 1 |
| | -- | |
| | US - A - 3 201 842 (CHARLES S. ARMISTEAD)<br><br>* Anspruch 1; Spalte 2, Zeilen 24-44; Figuren 1-4 * | 1 |
| | -- | |
| | IBM TECHNICAL DISCLOSURE BULLETIN, Band 14, Nr. 2, Mai 1972, New York, US, W.J. JENKO: "Floating hinge", Seiten 3739-3740<br><br>* Seite 3739, Abbildungen; Seite 3740, Absätze 2,3 * | 1 |
| | -- | |
| A | GB - A - 1 383 179 (E.A. J. TUNNI-CLIFFE)<br><br>* Anspruch 1; Seite 1, Zeilen 10-18; Seite 2, Zeilen 108-126; Figur 2 * | 1 |
| | ---- | |

**KLASSIFIKATION DER ANMELDUNG (Int Cl )**

B 42 F 9/00
G 09 F 1/10
E 05 D 3/02
A 47 G 1/17

**RECHERCHIERTE SACHGEBIETE (Int. Cl.)**

G 09 F 1/10
B 42 F 9/00
1/00
15/06
G 09 F 15/02
E 05 D 3/02
11/10
A 47 B 97/02
A 47 G 1/17

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-02-1981 | FRANSEN |

EPA form 1503.1  06.78